**Europäisches Patentamt**

**European Patent Office**

**Office européen des brevets**

(19)

(11) Veröffentlichungsnummer : **0 141 017**
**B1**

(12)

# EUROPÄISCHE PATENTSCHRIFT

(45) Veröffentlichungstag der Patentschrift :
09.09.87

(51) Int. Cl.⁴ : **B 64 C 27/33**

(21) Anmeldenummer : **84106719.2**

(22) Anmeldetag : **13.06.84**

(54) Rotor, insbesondere eines Drehflügelflugzeugs.

(30) Priorität : **08.09.83 DE 3332417**

(43) Veröffentlichungstag der Anmeldung :
**15.05.85 Patentblatt 85/20**

(45) Bekanntmachung des Hinweises auf die Patenterteilung : **09.09.87 Patentblatt 87/37**

(84) Benannte Vertragsstaaten :
**DE FR GB IT**

(56) Entgegenhaltungen :
**DE-B- 1 169 306**
**US-A- 2 845 131**
**US-A- 3 701 612**

(73) Patentinhaber : **Messerschmitt-Bölkow-Blohm Gesellschaft mit beschränkter Haftung**
**Robert-Koch-Strasse**
**D-8012 Ottobrunn (DE)**

(72) Erfinder : **Frommlet, Hubert, Dipl.-Ing.**
**Ahornring 65**
**D-8011 Höhenkirchen (DE)**

EP 0 141 017 B1

## Beschreibung

Die Erfindung betrifft einen Rotor gemäß dem Oberbegriff des Patentanspruchs 1.

Bei einem derartigen durch die US-A-28 45 131 bekannten Rotor ist wegen der begrenzt weichen Ausbildung des Blatthalses bzw. -anschlusses ein Verzicht auf gesonderte mechanische Blattlager und/oder -gelenke möglich, was nicht nur einen relativ einfachen Aufbau bzw. ein entsprechend geringes Baugewicht ergibt, sondern der Rotor ist auch für Verschleißschäden weniger anfällig als herkömmliche Rotoren. Allerdings bedingt der Verzicht auf gesonderte mechanische Blattlager, vor allem auf Blattwinkellager, aus Festigkeitsgründen eine große Baulänge des Verbindungsmittels des Rotorblattes mit der Rotornabe mit der Folge, daß es unter den Blattschlag- und Blattschwenkbewegungen zu beträchtlichen Auslenkungen kommen kann. Bei dem durch die DE-A-27 56 071 bekannten Blattanschluß wird die verwendete Steuerwelle zur Aufrechterhaltung der Funktionstüchtigkeit bereits von der Blattbewegung weitestgehend entkoppelt. Auch das Steuerglied des durch die DE-A-31 23 082 bekannten Rotors sieht eine solche Entkopplung vor, jedoch ergibt sich, abgesehen von einem besonderen Fertigungsaufwand für einen begrenzt biegeweichen Steuerwellenaufbau, wegen der bei der rotorkopfseitigen Lagerung unvermeidbaren Schrägstellung der Steuerwelle dem Blatthals gegenüber auch eine unerwünschte Erhöhung des aerodynamischen Widerstandes. Außerdem wäre die Steuerwelle einer Verschwenkung des Rotorblattes in der Rotorebene um einen seiner Anschlußbolzen in eine sog. Faltlage im Wege.

Der Erfindung liegt daher die Aufgabe zugrunde, einen Rotor der eingangs genannten Art derart zu verbessern, daß ohne gesteigerten Aufwand bzw. Schwierigkeiten ein bewegungsmäßiges Entkoppeln der Steuerwelle bzw. der Blattsteuerung vom Blatthals erreicht wird.

Diese Aufgabe ist gemäß dem Kennzeichen des Patentanspruchs 1 gelöst, wobei es lediglich einer bereits durch die DE-C-29 03 524 zur Erhöhung der Torsionsweichheit des Blattholms bekannten Blatthalsaufspaltung bedarf, um eine erfindungsgemäße Steuerwellenlagerung an der Blattwurzel zu ermöglichen bzw. den hierfür nötigen Freiraum zu schaffen, wobei eine zwingende koaxiale Anordnung der Steuerwelle mit der Blattwinkelachse erfolgt, um die Steuerwelle vom Blatthals zu entkoppeln. Zu dieser Lösung vermag der Blattanschluß gemäß der DE-A-27 56 071 nichts beizutragen, bei dem trotz Unterteilung eines zwischen der Blattwurzel und der Rotornabe eingefügten Verbindungsmittels in zueinander mit Abstand angeordnete Bandteile die dazwischen am Rotorblatt angreifende Steuerwelle in einer Schräglage zur Blattwinkelachse am Rotorkopf gelagert ist. Hier kommt somit nicht der Grundgedanke der vorliegenden Erfindung zum Tragen, daß solche Bandteile in stoffschlüssiger Vereinigung einerseits mit einem Blattflügel und andererseits mit einer Blattwurzel zu einem einstückigen Rotorblatt eine Lagerung der Steuerwelle an der Blattwurzel im Sinne der vorgenannten Erfindungaufgabe ermöglichen. Bei dem Blattanschluß gemäß der US-A-37 01 612 ist, abgesehen von der fehlenden Faltlagen-Verschwenkungsmöglichkeit für das Rotorblatt in der eingangs genannten Weise, die Steuerwelle zwar unter koaxialer Anordnung zur Blattwinkelachse dreh-, winkel- und längsbeweglich, jedoch läßt diese Lagerung der Steuerwelle am Rotorkopf keine für die vorbeschriebene Entkopplung ausreichende Winkelung derselben in Blattschwenk- und Blattschlagrichtung zu.

Die Unteransprüche bilden zweckmäßige Ausgestaltungen der Erfindung, wobei ein möglichst geringer Lagerungs- und Montage- bzw. Demontageaufwand für die Steuerwelle erreicht ist. Ein Ausführungsbeispiel der Erfindung wird im folgenden mit Bezug auf die Zeichnung näher erläutert. Dazu zeigt die Zeichnung in

Figur 1 eine Draufsicht auf einen Abschnitt einer Rotornabe im Anschlußbereich eines Rotorblattes,

Figur 2 einen Schnitt gemäß Schnittlinie II-II der Fig. 1,

Figur 3 einen Schnitt gemäß Schnittlinie III-III der Fig. 1.

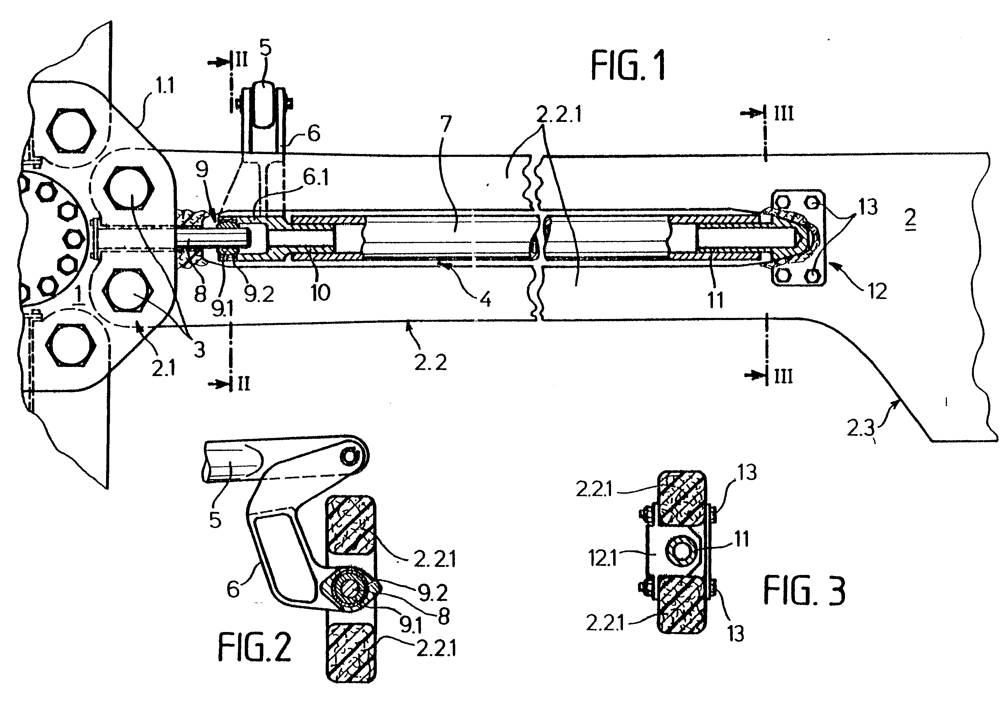

Die Rotornabe 1 gemäß Fig. 1 weist je Rotorblatt 2 bzw. Blattwurzel 2. 1 einen radial auswärtsgerichteten Rotornabenarm 1. 1 auf in Form einer Gabel, woran die Blattwurzel 2. 1 über zwei diese in Blattdickenrichtung durchquerende Bolzen 3 unbeweglich angeschlossen ist. Um trotz dieses sogenannten starren Blattanschlusses eine Blatteinstellwinkelverstellung zu ermöglichen, ist das vorzugsweise aus faserverstärktem Kunststoff bestehende Rotorblatt 2 mit einem torsionsweichen Blatthals 2. 2 zwischen der Blattwurzel 2. 1 und einem Blattflügel 2. 3 versehen. Die erforderliche Torsionsweichheit des Blatthalses 2. 2 wird hauptsächlich durch dessen langgestreckten Aufbau, z. B. aus Fasersträngen mit unidirektionaler Orientierung in Blattlängsrichtung, erreicht. Dabei trägt die dargestellte Aufspaltung des Blatthalses 2. 2 in zwei Stränge 2. 2. 1 zur Steigerung der Torsionsweichheit bei. Die Biegesteifigkeit dieser Blatthalsstränge 2. 2. 1 läßt sich durch entsprechende Wahl des Profilquerschnitts ohne Minderung der Torsionsweichheit steigern, z. B. durch ein längsgeschlitztes Hohl- oder T-Profil entsprechend den Bändern der DE-A-27 56 071.

Im Rahmen der vorliegenden Erfindung ist der Zweck der Aufspaltung des Blatthalses 2. 2 in die beiden Stränge 2. 2. 1 in der Schaffung eines solchen Freiraumes 4 zu sehen, daß für die Blatteinstellwinkelverstellung des Blattflügels 2. 3 mittels einer Steuerstange 5 und eines Steuerhebels 6 (Fig. 2) eine hierüber bewegbare Steuerwelle 7 zwischen der Blattwurzel 2. 1 und dem Blattflügel 2. 3 koaxial zur Blattwinkelachse angeordnet werden kann. Erst diese Anordnung der Steuerwelle 7 ermöglicht nämlich deren Lagerung an der Blattwurzel 2. 1 derart dreh-, winkel- und längsbeweglich, daß durch Drehwinkelbewegungen der Steuerwelle 7 Torsionsmomente auf den Blattflügel 2. 3 übertragbar sind ohne Beeinträchtigung der Steuerwellenfunktion durch Biegebewegungen des Blatthalses 2. 2 infolge Blattschlag- und Blattschwenkbewegungen sowie durch Blattlängsdehnungen. Um hierbei mit geringem baulichen Aufwand größtmögliche Verbindungssicherheit bzw. Belastbarkeit ohne Einschränkung der Lebensdauer zu erreichen, ist zur Lagerung der Steuerwelle 7 auf einem koaxial zur Blattwinkelachse in der Blattwurzel 2. 1 verankerten Zapfen 8 ein Kugelstück 9. 1 eines Gelenklagers 9 längsverschiebbar angeordnet, mit dessen Außenring 9. 2 die Steuerwelle 7 über den Steuerhebel 6 unbeweglich verbunden ist. Dabei ist das betreffende Steuerhebelende 6. 1 als Gehäuse für das Gelenklager 9 geformt und über ein ebenfalls koaxial zur Blattwinkelachse angeordnetes Zapfenstück 10 mit der hohlen Steuerwelle 7 zusammengefügt. Das Zapfenstück 10 kann in der Steuerwelle 7 durch Stifte verankert sein wie auch der am anderen Steuerwellenende eingefügte Zapfen 11, über den die Steuerwelle 7 im Bereich zwischen den Strängen 2. 2. 1 am Blattflügel 2. 3 unbeweglich angeschlossen ist. Die hier gewählte Verankerung des Zapfens 11 am Blattflügel 2. 3 mittels eines teilbaren Beschlages 12, wobei gemäß Fig. 3 der Zapfen zur Sicherung gegen Verdrehung einstückiger Bestandteil des unteren profilierten Beschlagteils 12. 1 ist, ermöglicht zu Montagezwecken nach dem Lösen der Beschlagbolzen 13 das Kippen der Steuerwelle 7 soweit nach unten aus der Blattebene, bis sie vom Zapfenstück 10 des Steuerhebels 6 leicht abziehbar ist. Hierzu braucht lediglich die Verbindung zwischen dem Steuerhebel 6 und der Steuerstange 5 getrennt zu werden, was auch die einzige Bedingung ist für das eingangs erwähnte Verschwenken des Rotorblattes 2 in der Rotordrehebene nach dem Ziehen eines der beiden Blattanschlußbolzen 3 ; es ist also weder der Steuerhebel noch die Steuerwelle 7 vom Rotorblatt 2 zu trennen.

## Patentansprüche

1. Rotor, insbesondere für Drehflügelflugzeuge, mit einem oder mehreren Rotorblättern (2) an einer Rotornabe (1), wobei der einzelne Blattanschluß durch ein in wenigstens zwei Stränge (2.2.1) aufgespaltenes torsionsweiches Verbindungsmittel hergestellt ist und die Blatteinstellwinkelverstellung mit einer Steuerstange (5) über einen Steuerhebel (6) an einer dem Verbindungsmittel entlang im freien Bereich zwischen den Strängen (2.2.1) sich erstreckenden Steuerwelle (7) erfolgt, welche Steuerwelle (7) in koaxialer Anordnung zur Blattwinkelachse an ihrem nabenseitigen Innenende dreh-, winkel- und längsbeweglich gelagert ist, dadurch gekennzeichnet, daß die Stränge (2.2.1) einen die Blattwurzel (2.1) und den Blattflügel (2.3) einstückig vereinigenden Blatthals (2.2) bilden, daß die Steuerwelle (7) an der Blattwurzel (2.1) gelagert ist und daß die Blattwurzel über zwei sie in Blattdickenrichtung durchquerende Bolzen (3) an einem zugeordneten Rotornabenatur (1.1) angeschlossen ist.

2. Rotor nach Anspruch 1, dadurch gekennzeichnet, daß die Steuerwellen-Lagerung durch einen koaxial zur Blattwinkelachse in der Blattwurzel (2.1) verankerten Zapfen (8) und über ein hierauf Längsverschiebbar sitzendes Kugelstück (9.1) eines Gelenklagers (9) erfolgt, dessen Außenring (9.2) mit der Steuerwelle (7) starr verbunden ist.

3. Rotor nach Anspruch 2 dadurch gekennzeichnet, daß die Steuerwelle (7) mit dem Außenring (9.2) über das als Gehäuse für das Gelenklager (9) geformte Steuerhebelende (6.1) verbunden ist.

4. Rotor nach Anspruch 3, dadurch gekennzeichnet, daß das Steuerhebelende (6.1) über ein Zapfenstück (10) mit der zumindest blatt- wurzelseitig hohlen Steuerwelle (7) zusammenge- fügt ist.

5. Rotor nach Anspruch 1 oder 4, dadurch gekennzeichnet, daß der Blattflügel (2.3) mit der Steuerwelle (7) über einen in der Steuerwelle eingefügten blattflügelseitigen Zapfen (11) verbunden ist, wobei der Zapfen (11) in einem teilbaren Beschlag (12) gehaltert ist.

6. Rotor nach Anspruch 5, dadurch gekennzeichnet, daß der blattflügelseitige Zapfen (11) einstückiger Bestandteil eines Beschlagteils (12.1) ist.

## Claims

1. A rotor, more especially for rotary-wing aircraft, having one or more rotor blades (2) on a rotor hub (1), in which respect the individual blade connection is produced by a torsionally- pliant connection means which is split up into at least two strands (2.2.1) and adjustment of the angle of incidence of the blade is effected with a control rod (5) by way of a control lever (6) on a control shaft (7) extending along the connection means in the free region between the strands (2.2.1), which control shaft (7) is mounted in coaxial arrangement with regard to the blade angle axis at its hub-sided inner end so as to be rotationally, angularly and longitudinally movable, characterised in that the strands (2.2.1) form a blade neck (2.2) which unites the blade root (2.1) and the blade wing (2.3) in one piece, in that the control shaft (7) is mounted at the blade root (2.1) and in that the blade root is connected, by way of two bolts (3) traversing it in the direction of the blade thickness, to an associated rotor hub arm (1.1).

2. A rotor according to claim 1, characterised in that the control shaft mounting is effected by a pin (8) anchored coaxially with the blade angle axis in the blade root (2.1) and by way of a ball piece (9.1.), seated so as to be longitudinally displaceable thereon, of a ball-and-socket joint (9), the outer ring (9.2) of which is connected rigidly to the control shaft (7).

3. A rotor according to claim 2, characterised in that the control shaft (7) is connected to the outer ring (9.2) by way of the control lever end (6.1) which is shaped as the housing for the ball-and-socket joint (9).

4. A rotor according to claim 3, characterised in that the control lever end (6.1) is joined together by way of a pin piece (10) with the control shaft (7) which is hollow at least at the blade root side.

5. A rotor according to claim 1 or 4, characterised in that the blade wing (2.3) is connected to the control shaft (7) by way of a pin (11) which is inserted at the blade wing side in the control shaft, in which respect the pin (11) is held in a divisible metal fitting (12).

6. A rotor according to claim 5, characterised in that the pin (11) at the blade wing side is a one-piece constituent part of a metal fitting part (12.1).

## Revendications

1. Rotor, en particulier pour appareils à voilure tournante, comprenant une ou plusieurs pale(s) (2) fixée(s) à un moyeu (1), la fixation individuelle de chaque pale étant assurée par un moyen de raccordement sensible à la torsion divisé en au moins deux branches (2.2.1) et le déplacement angulaire de réglage du pas s'effectuant à l'aide d'une biellette de commande (5) par l'intermédiaire d'un levier (6) agissant sur un arbre de commande (7) s'étendant le long du moyen de raccordement dans l'espace libre compris entre les branches (2.2.1), lequel arbre de commande (7), disposé coaxialement à l'axe de variation du pas des pales, est monté déplaçable en rotation, angulairement et longitudinalement au niveau de son extrémité interne côté moyeu, caractérisé par le fait que les branches (2.2.1) forment un col (2.2) réunissant en une seule pièce le pied (2.1) de la pale et le corps (2.3) de celle-ci, que l'arbre de commande (7) est monté sur le pied de pale (2.1) et que le pied de pale est raccordé à un bras (1.1) associé au moyeu du rotor au moyen de deux boulons (3) le traversant dans le sens de l'épaisseur de la pale.

2. Rotor selon la revendication 1, caractérisé par le fait que le montage de l'arbre de commande s'effectue au moyen d'un tourillon (8) ancré dans le pied (2.1) de la pale coaxialement à l'axe de variation du pas des pales et d'une rotule (9.1), disposée déplaçable longitudinalement sur le tourillon, d'une articulation à rotule (9) dont la bague extérieure (9.2) est rigidement raccordée à l'arbre de commande (7).

3. Rotor selon la revendication 2, caractérisé par le fait que l'arbre de commande (7) est raccordé à la bague extérieure (9.2) par l'intermédiaire de l'extrémité (6.1), façonnée en forme de logement pour l'articulation à rotule (9), du levier (6).

4. Rotor selon la revendication 3, caractérisé par le fait que l'extrémité (6.1) du levier est accouplé par l'intermédiaire d'une cheville (10) à l'arbre de commande (7), creux tout au moins du côté pied de pale.

5. Rotor selon la revendication 1 ou 4, caractérisé par le fait que le corps (2.3) de la pale est raccordé à l'arbre de commande (7) par une cheville (11), côté corps de la pale, insérée dans l'arbre de commande, la cheville (11) étant maintenue dans une ferrure divisible (12).

6. Rotor selon la revendication 5, caractérisé par le fait que la cheville (11), côté corps de pale, fait partie intégrante d'un élément (12.1) de la ferrure.

FIG.1

FIG.2

FIG.3